# FASCICULE DE BREVET EUROPEEN

(11) **EP 1 172 679 B1**
(45) Date de publication et mention de la délivrance du brevet: **07.12.2005**
(21) Numéro de dépôt: 01401827.9
(22) Date de dépôt: 09.07.2001
(51) Int. Cl.: G02B 23/10, G02B 23/12

(54) **Lunette comportant un objectif optique et deux oculaires**
Fernsehgerät mit einem optischen Objektiv und zwei Okularen
Telescope having an optical objective and two eye-pieces

(30) Priorité: 12.07.2000 FR 0009103
(43) Date de publication de la demande: 16.01.2002
(73) Titulaire: Sagem SA, 75015 Paris (FR)
(72) Inventeur: Coutris, Jean-François, 78430 Louveciennes (FR); Audren, Jean Thierry, 78470 St Remy Les Chevreuse (FR)
(74) Mandataire: Callon de Lamarck, Jean-Robert

(56) Documents cités:
- US-A- 5 282 082
- US-A- 5 579 165
- US-A- 5 621 567
- US-A- 6 075 644

## Description

La présente invention est relative aux lunettes binoculaires.

Plus précisément, elle concerne les lunettes binoculaires du type de celles qui comportent un objectif optique, ainsi que des moyens de séparation d'images, tels qu'une lame semi-réfléchissante, un cube séparateur, etc., qui transmettent sur deux voies optiques l'image qu'ils reçoivent et qui a été collectée par l'objectif, les deux voies optiques véhiculant l'image pour la retransmettre sur deux oculaires.

De telles lunettes binoculaires sont généralement utilisées pour l'observation diurne faible luminosité ou pour l'observation nocturne.

Elles comportent alors habituellement des moyens d'intensification de luminance qui sont disposés sur le trajet des images, entre l'objectif et les moyens de séparation.

Pour un exemple de structure de ce type, on pourra avantageusement se référer à la demande de brevet FR 2.718.534.

On comprend qu'il peut être souhaitable de disposer d'un moyen pour transmettre à un opérateur qui réalise une mission de surveillance à l'aide d'une lunette binoculaire de ce type, différentes informations qui lui permettent de compléter son observation ou lui donne des indications complémentaires, et ce sans que ledit opérateur n'est à quitter ses lunettes binoculaires.

L'invention propose quant à elle une solution qui a l'avantage de tirer partie de la structure précitée déjà connue pour les lunettes binoculaires.

Ainsi, l'invention propose une lunette binoculaire comportant un objectif optique, ainsi que des moyens de séparation d'images qui transmettent sur deux voies optiques l'image qu'ils reçoivent et qui a été collectée par l'objectif, les deux voies optiques véhiculant l'image pour la retransmettre sur deux oculaires, caractérisée en ce qu'elle comporte des moyens pour projeter sur les moyens de séparation une image complémentaire qui est également séparée par réflexion/transmission sur lesdits moyens pour être transmise sur les deux voies optiques et véhiculées par ces deux voies sur les deux oculaires.

Une telle lunette est avantageusement complétée par les différentes caractéristiques suivantes :
- elle comporte en outre des moyens d'acquisition d'images et des moyens pour transmettre les images acquises par ces moyens aux moyens de projection ;
- les moyens d'acquisition sont portés par un support qui porte les autres moyens optiques de la lunette, ces moyens d'acquisition étant aptes à visualiser la même scène que l'objectif optique ;
- les moyens d'acquisition sont portés par un support indépendant de celui qui porte les autres moyens optiques de la lunette, ces moyens d'acquisition étant aptes à visualiser une scène différente de celle visualisée par l'objectif optique ;
- la lunette comporte une unité de gestion à microprocesseur et mémoire vidéo qui commande les moyens de projection ;
- les moyens d'acquisition d'images sont reliés à l'unité de gestion et transmettent aux moyens de projection les images qu'ils acquièrent par l'intermédiaire de l'unité de gestion ;
- elle comporte des moyens formant interrupteur qui permettent à l'opérateur de couper les moyens de projection lorsqu'il souhaite ne visualiser que l'image visible ;
- la lunette comporte des moyens d'intensification de luminance interposés entre l'objectif optique et les moyens de séparation, et des moyens permettant à l'opérateur de désactiver les moyens d'intensification de luminance, s'il ne souhaite visualiser que l'image complémentaire ;
- la lunette comporte des moyens d'intensification de luminance interposés entre l'objectif optique et les moyens de séparation, la lumière en sortie des moyens d'intensification et celle émise par les moyens de projection étant avantageusement de longueurs d'onde différentes, les moyens de séparation étant une lame semi-réfléchissante dichroïque qui transmet et réfléchit à ces deux longueurs d'onde avec des taux de transmission et de réflexion tels que le taux de transmission et le taux de réflexion à l'une de ses longueurs d'onde sont sensiblement égaux au taux de réflexion et au taux de transmission à l'autre de ces longueurs d'onde ;
- la lunette comporte des moyens aptes à permettre à l'opérateur de régler les moyens de projection de façon à ajuster la position de l'image complémentaire par rapport à celle de l'image visible ;
- la lunette comporte des moyens d'intensification de luminance interposés entre l'objectif optique et les moyens de séparation, les moyens de projection de l'image complémentaire étant disposés du côté des moyens de séparation opposé aux moyens d'intensification de luminance, la direction selon laquelle lesdits moyens projettent l'image étant perpendiculaire à la direction de la lumière en sortie des moyens d'intensification.

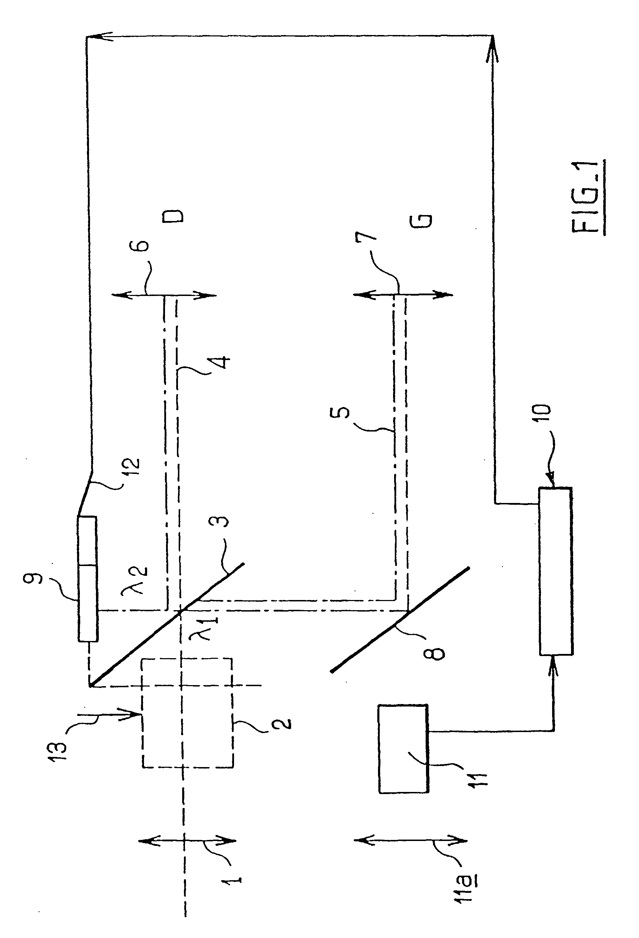

D'autres caractéristiques et avantages de l'invention ressortiront encore de la description qui suit, laquelle est purement illustrative et non limitative et doit être lue en regard de la figure unique annexée sur laquelle on a représenté une lunette binoculaire conforme à un mode de réalisation possible de l'invention.

La lunette binoculaire représentée sur ladite figure comporte un objectif optique 1 unique aligné sur un premier axe optique avec un tube 2 à intensification de luminance et un séparateur d'images 3, qui en l'occurrence est constitué par une lame semi-réfléchissante, mais qui pourrait également être constitué par d'autres moyens de séparation (cube optique de séparation, par exemple).

Cette lame 3 divise la lumière qu'elle reçoit pour transmettre l'image sur deux voies optiques 4 et 5.

Ces deux voies optiques 4 et 5 véhiculent l'image pour la retransmettre respectivement sur un oculaire 6 et un oculaire 7 (lesquels correspondent respectivement aux oculaires de l'oeil droit et de l'oeil gauche).

La voie optique 4 et l'oculaire 6 sont alignés avec l'objectif optique 1, le tube 2 et la lame 3 de séparation d'images 3.

La voie optique 5 comporte quant à elle un miroir de renvoi 8 qui renvoie en angle droit, sur l'oculaire 7, la lumière réfléchie par la lame semi-réfléchissante 3.

Bien entendu, le miroir 8 pourrait être remplacé par tout autre moyen de réflexion (prisme, etc.).

La structure optique qui vient d'être décrite est en elle-même classique. Elle n'est donnée qu'à titre d'exemple, de nombreuses autres dispositions étant bien entendu possibles.

La lunette binoculaire qui est conforme à un mode de réalisation possible de l'invention et qui est représentée sur la figure comporte en outre un micro moniteur 9 apte à projeter sur la lame semi-réfléchissante 3 une image destinée à être superposée à l'image visible et à être véhiculée avec celle-ci jusqu'aux oculaires 6 et 7 par les voies 4 et 5.

Ce micro moniteur 9 est disposé par rapport à la lame 3 de telle sorte que l'image qu'il projette sur celle-ci :
- est partiellement réfléchie sur la voie 4 par ladite lame 3, et
- est partiellement transmise sur la voie 5 à travers ladite lame 3.

Notamment, le micro-moniteur 9 est disposé du côté de la lame 3 opposé au tube 2, la direction selon laquelle il projette l'image étant perpendiculaire à la direction optique de la voie 4, du tube 2 et de l'objectif optique 1. La lame 3 s'étend alors à 45° par rapport à l'une et l'autre de ces deux directions.

Ce micro moniteur 9 est commandé par une unité de gestion 10 qui par exemple comporte un microprocesseur et une mémoire vidéo.

Cette unité de gestion 10 est elle-même avantageusement reliée à des moyens d'acquisition d'images 11 (caméra IR, imageur radar, etc.) associés à des moyens 11a formant objectif optique.

Ces moyens 11, 11a peuvent être portés par la structure mécanique qui porte la lunette, de façon à permettre de visualiser la même scène que l'objectif 1.

Cette structure mécanique est par exemple un casque sur lequel les lunettes sont montées et qui est porté par l'opérateur.

En variante, les moyens 11, 11 a peuvent être portés par un support indépendant de celui de la lunette et notamment par un support apte à être manipulé par l'opérateur pour permettre à celui-ci d'observer grâce aux moyens d'acquisition 11 a des zones de son environnement différentes de celles dans le champ de l'objectif de la lunette.

Avec une structure du type de celles qui viennent d'être décrites, l'opérateur qui utilise la lunette binoculaire ainsi constituée visualise une image qui est la superposition de l'image visible acquise par l'objectif optique 1 et d'une image complémentaire qui est transmise par le micromoniteur 9.

Cette image complémentaire peut être l'image acquise par les moyens 11.

Elle peut également être constituée par des caractères alphanumériques, des symboles, etc.. donnant des informations diverses à l'opérateur qui visualise l'image reçue sur les oculaires.

Par ailleurs, la structure comporte des moyens 12 formant interrupteur qui permettent à l'opérateur de couper le micromoniteur 9 lorsqu'il souhaite ne visualiser que l'image visible.

Egalement, des moyens 13 permettent à l'opérateur de désactiver le tube 2 d'intensification de luminance, s'il ne souhaite visualiser que l'image projetée par le micromoniteur 9.

Par ailleurs encore, la lumière en sortie du tube 2 et celle émise par le micromoniteur 9 sont avantageusement de longueurs d'onde λ1 et λ2 différentes, tandis que la lame 3 est une lame dichroïque qui transmet et réfléchit à ces deux longueurs d'onde avec des taux de transmission et de réflexion tels que le taux de transmission et le taux de réflexion à l'une de ses longueurs d'onde sont sensiblement égaux au taux de réflexion et au taux de transmission à l'autre de ces longueurs d'onde.

Par exemple, les taux de transmission et de réflexion de la lame 3 sont respectivement de l'ordre de 30% et 70% à la longueur d'onde λ1, alors qu'ils sont respectivement de l'ordre de 70% et 30% à la longueur d'onde λ2.

De cette façon, le pourcentage d'intensité lumineuse reçu sur la voie 4 est sensiblement le même pour d'une part l'image visible transmise en sortie du tube 2 (qui est de longueur d'onde λ1 en sortie du tube 2 et se transmet partiellement sur la voie 4 en traversant la lame 3) et pour d'autre part l'image émise par le micro-moniteur 9 (qui est de longueur d'onde λ2 et se réfléchit partiellement sur la voie 4).

De même, le pourcentage d'intensité lumineuse reçu sur la voie 5 est sensiblement le même pour d'une part l'image visible transmise en sortie du tube 2 (qui se transmet partiellement sur la voie 4 en traversant la lame 3 et se réfléchit partiellement sur la voie 5) et pour d'autre part l'image émise par le micro-moniteur 9 (qui se transmet partiellement sur la voie 5 en traversant la lame 3 et se réfléchit partiellement sur la voie 4).

L'utilisation d'une lame dichroïque permet de cette façon de compenser la dissymétrie naturelle des deux voies gauche et droite 4 et 5, lorsque celles-ci présentent des transmissions différentes.

Par ailleurs, la structure comporte en outre avantageusement des moyens qui permettent à l'opérateur de régler le microcontrôleur 9 de façon à ajuster la position de l'image projetée sur et à travers la lame 3 par rapport à celle de l'image visible (translation provoquée par une rotation de mollette de réglage par exemple).

## Revendications

1. Lunette binoculaire comportant un objectif optique (1), ainsi que des moyens de séparation d'images (3) qui transmettent sur deux voies optiques (4, 5) l'image qu'ils reçoivent et qui a été collectée par l'objectif (1), les deux voies optiques véhiculant l'image pour la retransmettre sur deux oculaires, **caractérisée en ce que** les moyens de séparation (3) d'image sont une lame semi-réfléchissante et **en ce qu'**elle comporte des moyens (9) pour projeter sur les moyens de séparation (3) une seconde image qui est également séparée par réflexion/transmission sur lesdits moyens de séparation (3) pour être transmise sur les deux voies optiques (4, 5) et véhiculées par ces deux voies sur les deux oculaires (6, 7).

2. Lunette binoculaire selon la revendication 1, **caractérisée en ce qu'**elle comporte en outre des moyens d'acquisition d'images (11) et des moyens pour transmettre les images acquises par ces moyens aux moyens de projection.

3. Lunette binoculaire selon la revendication 2, **caractérisée en ce que** les moyens d'acquisition (11) sont portés par un support qui porte les autres moyens optiques de la lunette, ces moyens d'acquisition étant aptes à visualiser la même scène que l'objectif optique (1).

4. Lunette selon la revendication 2, **caractérisée en ce que** les moyens d'acquisition (11) sont portés par un support indépendant de celui qui porte les autres moyens optiques de la lunette, ces moyens d'acquisition étant aptes à visualiser une scène différente de celle visualisée par l'objectif optique (1).

5. Lunette selon l'une des revendications précédentes, **caractérisée en ce qu'**elle comporte une unité de gestion (10) à microprocesseur et mémoire vidéo qui commande les moyens de projection.

6. Lunette selon la revendication 5 prise en combinaison avec l'une des revendications 2 à 4, **caractérisée en ce que** les moyens d'acquisition (11) d'images sont reliés à l'unité de gestion (10) et transmettent aux moyens de projection les images qu'ils acquièrent par l'intermédiaire de l'unité de gestion.

7. Lunette selon l'une des revendications précédentes, **caractérisé en ce qu'**elle comporte des moyens (12) formant interrupteur qui permettent à l'opérateur de couper les moyens de projection lorsqu'il souhaite ne visualiser que l'image visible.

8. Lunette selon l'une des revendications précédentes comportant des moyens d'intensification de luminance (2) interposés entre l'objectif optique (1) et les moyens de séparation (3), **caractérisée en ce qu'**elle comporte des moyens permettant à l'opérateur de désactiver les moyens d'intensification de luminance, s'il ne souhaite visualiser que l'image complémentaire.

9. Lunette selon l'une des revendications précédentes comportant des moyens d'intensification de luminance (2) interposés entre l'objectif optique (1) et les moyens de séparation (3), **caractérisée en ce que** la lumière en sortie des moyens d'intensification et celle émise par les moyens de projection sont avantageusement de longueurs d'onde différentes, les moyens de séparation d'image (3) étant une lame (3) semi-réfléchissante dichroïque qui transmet et réfléchit à ces deux longueurs d'onde avec des taux de transmission et de réflexion tels que le taux de transmission et le taux de réflexion à l'une de ses longueurs d'onde sont sensiblement égaux au taux de réflexion et au taux de transmission à l'autre de ces longueurs d'onde.

10. Lunette selon l'une des revendications précédentes, **caractérisée en ce qu'**elle comporte des moyens aptes à permettre à l'opérateur de régler les moyens de projection de façon à ajuster la position de l'image complémentaire par rapport à celle de l'image visible.

11. Lunette selon l'une des revendications précédentes comportant des moyens d'intensification de luminance (2) interposés entre l'objectif optique (1) et les moyens de séparation d'image (3), **caractérisé en ce que** les moyens (9) de projection de l'image complémentaire sont disposés du côté des moyens (3) de séparation opposé aux moyens d'intensification de luminance, la direction selon laquelle lesdits moyens projettent l'image étant perpendiculaire à la direction de la lumière en sortie des moyens d'intensification.

## Patentansprüche

1. Binokulares Fernglas, das folgendes umfaßt: ein optisches Objektiv (1) sowie Mittel zur Bildauftrennung (3), die das vom Objektiv (1) erfaßte und von ihnen empfangene Bild auf zwei optische Wege (4, 5) weiterleiten, wobei die beiden optischen Wege das Bild weiterleiten, um es auf zwei Okulare zu übertragen, **dadurch gekennzeichnet, daß** die Mittel zur Bildauftrennung (3) eine halb-reflektierende Platte sind und dadurch, daß es Mittel (9) umfaßt, um auf die Auftrennmittel (3) ein zweites Bild zu projizieren, das ebenfalls von den Auftrennmitteln (3) durch Reflexion/Durchlaß aufgetrennt wird, um auf die beiden optischen Wege (4, 5) übertragen und von diesen beiden Wegen auf die beiden Okulare (6, 7) weitergeleitet zu werden.

2. Binokulares Fernglas nach Anspruch 1, **dadurch gekennzeichnet, daß** es außerdem Mittel zur Bilderfassung (11) umfaßt, sowie Mittel zur Übertragung der von diesen Mitteln erfaßten Bilder an die Projektionsmittel.

3. Binokulares Fernglas nach Anspruch 2, **dadurch gekennzeichnet, daß** die Erfassungsmittel (11) durch einen Träger getragen werden, der die weiteren optischen Mittel des Fernglases trägt, wobei diese Erfassungsmittel dafür eingerichtet sind, dieselbe Szene wie das optische Objektiv (1) zu visualisieren.

4. Fernglas nach Anspruch 2, **dadurch gekennzeichnet, daß** die Erfassungsmittel (11) durch einen Träger getragen werden, der unabhängig von demjenigen ist, der die weiteren optischen Mittel des Fernglases trägt, wobei diese Erfassungsmittel dafür eingerichtet sind, eine andere Szene als die vom optischen Objektiv (1) visualisierte darzustellen.

5. Fernglas nach einem der vorhergehenden Ansprüche, **dadurch gekennzeichnet, daß** es eine Verwaltungseinheit (10) mit einem Mikroprozessor und Videospeicher umfaßt, die die Projektionsmittel steuert.

6. Fernglas nach Anspruch 5 in Kombination mit einem der Ansprüche 2 bis 4, **dadurch gekennzeichnet, daß** die Bilderfassungsmittel (11) mit der Verwaltungseinheit (10) verbunden sind und die von ihnen erfaßten Bilder mittels der Verwaltungseinheit an die Projektionsmittel übertragen.

7. Fernglas nach einem der vorhergehenden Ansprüche, **dadurch gekennzeichnet, daß** es Mittel (12) umfaßt, die einen Schalter bilden, der es dem Bediener gestattet, die Projektionsmittel abzuschalten, wenn er nur das sichtbare Bild visualisieren will.

8. Fernglas nach einem der vorhergehenden Ansprüche, das Helligkeitsverstärkungsmittel (2) umfaßt, die zwischen das optische Objektiv (1) und die Auftrennmittel (3) geschaltet sind, **dadurch gekennzeichnet, daß** es Mittel umfaßt, die es dem Bediener gestatten, die Helligkeitsverstärkungsmittel abzuschalten, wenn er nur das komplementäre Bild visualisieren will.

9. Fernglas nach einem der vorhergehenden Ansprüche, das Helligkeitsverstärkungsmittel (2) umfaßt, die zwischen das optische Objektiv (1) und die Auftrennmittel (3) geschaltet sind, **dadurch gekennzeichnet, daß** das Licht am Ausgang der Verstärkungsmittel und das von den Projektionsmitteln ausgesendete Licht vorteilhafterweise eine unterschiedliche Wellenlänge haben, wobei die Bildauftrennmittel (3) eine dichroitische halb-reflektierende Platte (3) sind, die bei diesen beiden Wellenlängen mit solchen Durchlaß- und Reflektionsraten durchläßt und reflektiert, daß die Durchlaßrate und die Reflektionsrate bei der einen dieser Wellenlängen im wesentlichen gleich der Reflektionsrate und der Durchlaßrate bei der anderen dieser Wellenlängen sind.

10. Fernglas nach einem der vorhergehenden Ansprüche, **dadurch gekennzeichnet, daß** es Mittel umfaßt, die dafür eingerichtet sind, es dem Bediener zu gestatten, die Projektionsmittel so einzustellen, daß die Position des komplementären Bildes in Bezug auf diejenige des sichtbaren Bildes justiert werden kann.

11. Fernglas nach einem der vorhergehenden Ansprüche, das Helligkeitsverstärkungsmittel (2) umfaßt, die zwischen das optische Objektiv (1) und die Büdauftrennmittel (3) geschaltet sind, **dadurch gekennzeichnet, daß** die Mittel (9) zur Projektion des komplementären Bildes neben den Auftrennmitteln (3) und entgegengesetzt zu den Helligkeitsverstärkungsmitteln liegend angeordnet sind, wobei die Richtung, in der diese Mittel das Bild projizieren, senkrecht zur Richtung des Lichts am Ausgang der Verstärkungsmittel ist.

## Claims

1. Binocular telescope, which includes an optical objective (1) and image-splitting means (3), which means transmit the image that they receive over two optical channels (4, 5), this image having been collected by the objective (1), the two optical channels conveying the image so as to retransmit it onto two eye-pieces, **characterized in that** the image-splitting means (3) are a semi-reflecting plate and **in that** the telescope includes means (9) for projecting, onto the splitting means (3), a second image that is also split by reflection/transmission on the said splitting means (3) in order to be transmitted along the two optical channels (4, 5) and conveyed by these two channels to the two eye-pieces (6, 7).

2. Binocular telescope according to Claim 1, **characterized in that** it furthermore includes image acquisition means (11) and means for transmitting the images acquired by these means to the projection means.

3. Binocular telescope according to Claim 2, **characterized in that** the acquisition means (11) are borne by a support that bears the other optical means of the telescope, these acquisition means being capable of displaying the same scene as the optical objective (1).

4. Telescope according to Claim 2, **characterized in that** the acquisition means (11) are borne by a support independent of that which bears the other optical means of the telescope, these acquisition means being capable of displaying a scene different from that displayed by the optical objective (1).

5. Telescope according to one of the preceding claims, **characterized in that** it includes a control unit (10) based on a microprocessor and a video memory that controls the projection means.

6. Telescope according to Claim 5, taken in combination with one of Claims 2 to 4, **characterized in that** the image acquisition means (11) are connected to the control unit (10) and transmit the images that they acquire to the projection means, via the control unit.

7. Telescope according to one of the preceding claims, **characterized in that** it includes means (12) that form a switch, allowing the operator to cut off the projection means when he desires to display only the visible image.

8. Telescope according to one of the preceding claims, which includes brightness intensification means (2) interposed between the optical objective (1) and the splitting means (3), **characterized in that** it includes means that allow the operator to deactivate the brightness intensification means if he desires to display only the complementary image.

9. Telescope according to one of the preceding claims, which includes brightness intensification means (2) interposed between the optical objective (1) and the splitting means (3), **characterized in that** the light emanating from the intensification means and that emitted by the projection means advantageously have different wavelengths, the image splitting means (3) being a dichroic semireflecting plate (3) that transmits and reflects at both these wavelengths with transmission and reflection factors such that the transmission factor and the reflection factor at one of its wavelengths are approximately equal to the reflection factor and the transmission factor at the other of these wavelengths.

10. Telescope according to one of the preceding claims, **characterized in that** it includes means capable of allowing the operator to control the projection means so as to adjust the position of the complementary image relative to that of the visible image.

11. Telescope according to one of the preceding claims, which includes brightness intensification means (2) interposed between the optical objective (1) and the image splitting means (3), **characterized in that** the means (9) for projecting the complementary image are placed on the opposite side of the splitting means (3) from the brightness intensification means, the direction along which the said means project the image being perpendicular to the direction of the light emanating from the intensification means.
